# EUROPÄISCHE PATENTSCHRIFT

(11) **EP 1 127 096 B1**
(45) Veröffentlichungstag und Bekanntmachung des Hinweises auf die Patenterteilung: **10.05.2006**
(21) Anmeldenummer: 99959270.2
(22) Anmeldetag: 03.11.1999
(51) Int. Cl.: C09J 7/02, B32B 27/06, B32B 37/00, B29C 47/06, B32B 41/02

(54) **VERFAHREN ZUM HERSTELLEN EINES MEHRSCHICHTIGEN COEXTRUDATES UND DANACH HERGESTELLTES COEXTRUDAT**
METHOD FOR PRODUCING A MULTILAYER COEXTRUDATE AND A COEXTRUDATE PRODUCED ACCORDING THERETO
PROCEDE DE PRODUCTION D'UN CO-EXTRUDE MULTICOUCHE, ET CO-EXTRUDE PRODUIT SELON CE PROCEDE

(30) Priorität: 06.11.1998 DE 19851105
(43) Veröffentlichungstag der Anmeldung: 29.08.2001
(73) Patentinhaber: Huhtamaki Forchheim Zweigniederlassung der Huhtamaki Deutschland GmbH & Co. KG, 91301 Forchheim (DE)
(72) Erfinder: GÜNTER, Walter, D-37120 Eddigehausen (DE)
(74) Vertreter: Hutzelmann, Gerhard
(86) Internationale Anmeldenummer: PCT/EP1999/008405
(87) Internationale Veröffentlichungsnummer: WO 2000/027940

(56) Entgegenhaltungen:
- WO-A-94/15907
- CHEMICAL ABSTRACTS, vol. 114, no. 11, 18 March 1991, Columbus, Ohio, US; abstract no. 101094m, I. I. KANDROR ET. AL. 'Chemical Properties of alpha-Cyanoacrylic acid.' page 665 ;column 2 ; & ZH. OBSHCH. KHIM.,, vol.60, no.9 pages 2160 - 8

## Beschreibung

Die Erfindung bezieht sich auf ein Verfahren zum Herstellen eines mehrschichtigen Coextrudats, mit einer Kunststoff-Schicht, die Release-Eigenschaften gegenüber Klebstoffen aufweist, wobei die die Release-Eigenschaften erzeugenden Materialien innerhalb der Kunststoff-Schicht angeordnet sind.

Der Erfindung liegt die Aufgabe zugrunde, ein Verfahren der genannten Art aufzuzeigen, mit dem in rationeller Weise ein Verbund aus Bahn, Kleber, Release-Schicht und weiterer Bahn für die Release-Schicht hergestellt werden kann.

Diese Aufgabe wird erfindungsgemäß dadurch gelöst, daß beim Herstellen des Coextrudats eine erste Bahn vorgesehen ist, auf deren einer Seite eine Kleberschicht angeordnet wird, auf welche die Kunststoff-Schicht mit den Release-Eigenschaften folgt, die ihrerseits mit einer zweiten Bahn verbunden ist.

Durch diese Coextrusion wird in einem einzigen Arbeitsgang zumindest der Grundaufbau des Verbundes hergestellt.

Dabei hat es sich als besonders günstig erwiesen, wenn gemäß einer weiteren Ausgestaltung der Erfindung die Schichten des Coextrudates gleichzeitig coextrudiert werden.

Damit ist eine besonders rationelle Herstellung des gesamten Schichtaufbaus erreicht.

Eine besonders vorteilhafte Ausgestaltung der Erfindung liegt darin, daß die Schichten gleichzeitig im Blasverfahren extrudiert werden.

Es ist gemäß einer weiteren Ausgestaltung der Erfindung jedoch auch möglich, daß die Schichten im Cast-Verfahren als Flachfolie hergestellt werden.

Gemäß einer weiteren vorteilhaften Ausgestaltung der Erfindung ist es möglich, daß als erste oder zweite Bahn eine Trägerbahn vorgesehen ist, auf welche die übrigen Schichten in einem einzigen Verfahrensschritt aufextrudiert werden.

Insbesondere bei Verwendung einer nicht oder nur schwer mitextrudierbaren Bahn ist dieses Verfahren besonders günstig, da alle übrigen Schichten in einem einzigen Arbeitsgang auf die als Trägerbahn dienende Bahn aufgebracht werden können.

Ebenfalls sehr vorteilhaft ist es, wenn gemäß einer weiteren Ausgestaltung der Erfindung als Trägerbahn eine Kunststoffolie vorgesehen ist, auf welche die übrigen Schichten in einem einzigen Verfahrensschritt aufextrudiert werden.

Eine weitere vorteilhafte Ausgestaltung der Erfindung ist dadurch gekennzeichnet, daß wenigstens die Trägerbahn gereckt wird.

Dadurch erhält das Coextrudat günstige Festigkeitswerte.

Weiterhin ist es gemäß einer vorteilhaften Ausgestaltung der Erfindung möglich, daß das gesamte Coextrudat gereckt wird.

Dadurch können alle reckbaren Schichten zur Erhöhung der Festigkeitswerte beitragen.

Ein mehrschichtiges Coextrudat hat gemäß einer vorteilhaften Ausgestaltung der Erfindung wenigstens zwei Kunststoffolien, zwischen denen eine Kleberschicht und eine weitere Schicht mit Release-Eigenschaften gegenüber dem Kleber angeordnet sind.

Eine weitere vorteilhafte Ausgestaltung der Erfindung liegt darin, daß weitere Schichten vorgesehen sind, die wahlweise beiderseits der Kunststoffolien angeordnet sind.

Als sehr vorteilhaft hat es sich ergeben, wenn gemäß einer weiteren Ausgestaltung der Erfindung wenigstens ein Teil des Coextrudat-Aufbaus gereckt ist.

Durch das Recken der Trägerbahn oder des fertigen Coextrudates werden erhebliche Festigkeitssteigerungen erzielt.

In der Zeichnung ist die Erfindung anhand von zwei Ausführungsbeispielen veranschaulicht. Dabei zeigen:
- Fig. 1: einen schematisch dargestellten Aufbau eines aus vier Schichten bestehenden Verbundes und
- Fig.2: einen weiteren Verbund aus fünf Lagen, ebenfalls in schematischer Darstellung.

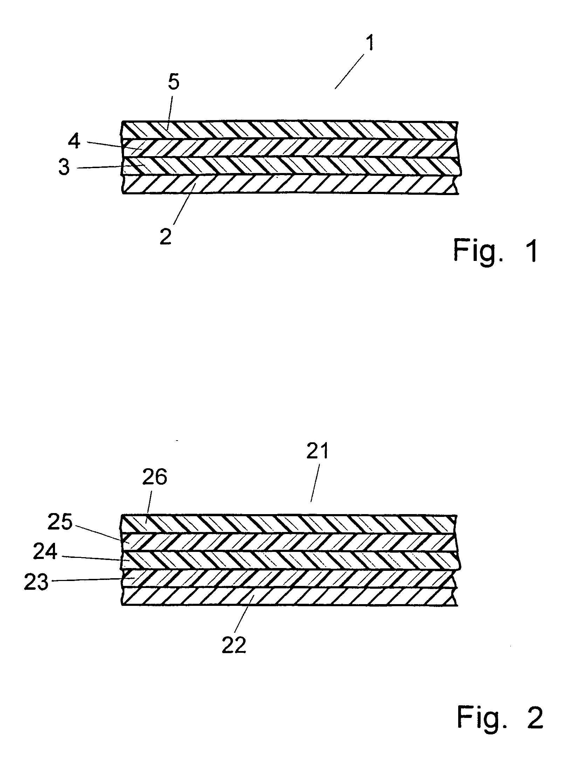

Mit 1 ist in Fig. 1 ein Verbund bezeichnet, der aus vier Lagen aufgebaut ist und im Coextrusionsverfahren hergestellt wurde. Auf der einen Seite einer ersten Bahn 2 ist eine Kleberschicht 3 angeordnet, der eine weitere Schicht 4 mit Release-Eigenschaften gegenüber dem Kleber zugeordnet ist. Diese Release-Schicht 4 ist ihrerseits mit einer zweiten Bahn 5 verbunden. Wenn die beiden Bahnen 2 und 5 aus einem coextrudierbaren Kunststoff bestehen, können alle vier Schichten gleichzeitig und zwar sowohl im Blasverfahren als auch im Cast-Verfahren hergestellt werden. Es ist aber auch möglich die Bahn 2 oder die Bahn 5 nachträglich im Coextrusionsverfahren mit den anderen Schichten zu beschichten.

In Fig.2 ist ein weiterer Verbund 21 dargestellt, der aus fünf Lagen besteht. Es handelt sich hierbei um eine Bahn 22, die als Trägerschicht für eine Releaseschicht 24 dient. Dieser Releaseschicht 24 ist eine Kleberschicht 23 zugewandt, welche auf einer aus Kunststoff hergestellten Bahn 25 verankert ist. Diese als Kernschicht dienende Bahn 25 weist auf ihrer von der Kleberschicht 23 abgekehrten Seite eine Oberflächenschicht 26 auf. Eine derartige Oberflächenschicht kann auch auf der als Trägerschicht für die Releaseschicht dienenden Bahn 22 vorgesehen sein.

Als Trägerschicht für die Releaseschicht können unterschiedliche Kunststoffe zum Einsatz kommen.

Gute Eigenschaften wurden z,B, erzielt mit LDPE, LLDPE, HDPE, PP, mPE, PETP und PS jeweils in einer Dicke von 20 bis 40µm, wobei die eigentliche Releaseschicht eine Dicke von 5 bis 10µm aufwies.

Für die den Kleber tragende Bahn wurde mit gutem Erfolg PP, OPP, PE, LDPE, LLDPE, mPE, PS und PET verwendet, wobei die Materialstärken in Abhängigkeit vom eingesetzten Material zwischen 60 und 200µm lagen. Teilweise wurde zur Verbesserung der Bedruckbarkeit noch eine außenliegende Beschichtung dieser Bahn vorgesehen.

Teilweise wurden auch die Bahnen in mehrere Einzelschichten aus unterschiedlichen Materialien aufgeteilt.

Als Kleber wurden erfolgreich extrudierbare permanent klebrige Kleber auf Basis von Hotmelts, Schmelzhaftkleber und Polyolefine mit entsprechenden klebrigmachenden Zusätzen eingesetzt.

### Beispiel 1:

Verwendung von SIS, SBS, SEBS, SEP Blockcopolymere mit Schmelzindizes zwischen 8 bis 65 g/10 min bei 200 °C und 5 kg. Der Styrolgehalt der Polymeren liegt zwischen 10 und 35 %. Die Eigenschaften der Klebstoffschicht werden durch Zugabe von Harzen und Weichmachern gesteuert, z.B. durch aliphatische Hydrocarbonharze, Polyterpenharze, hydrolisierte Hydrocarbonharze, aromatische Hydrocarbonharze, Paraffinwachse, Mikrokristallwachse, Polyisobutylen und Prozessöle.

Flüssige Komponenten werden durch vorgeschaltetes Compoundieren in eine extrusionsfähige Form gebracht.

Die Extrusionstemperaturen liegen zwischen 100 und 240 °C unter gleichzeitiger Vermeidung von zu hohen Scherkräften.

### Beispiel 2:

Eine weitere Möglichkeit zur Herstellung der Klebeschicht besteht darin, UV-Acrylate oder UV-härtende PSA's mittels Schmelzefördertechnik zwischen die coextrudierten Träger- und Releaseschichten einzubringen.

Die strahlenhärtenden Ausgangsstoffe sind z.B. Acrylatcopolymere mit festeingebautem Photoinitiator. Die UV-Vernetzung erfolgt durch die polymere Trägerschicht des Klebers.

Die Acrylatcopolymere können durch Harze und Weichmacher modifiziert werden, wobei der Tack der Klebeschicht über die Bestrahlungsdosis geregelt werden kann.

Typische Wellenlängen für die Bestrahlung zur Vernetzung liegen im Bereich zwischen 250 und 260 nm (UVC)

Typische Verarbeitungstemperaturen der Acrylat-Copolymere liegen zwischen 110 und 150 °C.

Bei Verwendung einer Trägerbahn, die im Coextrusionsverfahren beschichtet wird, ist es möglich, sowohl die Trägerbahn alleine als auch das fertige Coextrudat zu recken um damit die Festigkeitseigenschaften zu erhöhen.

Wird der gesamte Aufbau als Coextrudat hergestellt, so kann dieses anschließend zur Erhöhung der Festigkeitswerte ebenfalls gereckt werden.

## Patentansprüche

1. Verfahren zum Herstellen eines mehrschichtigen Coextrudats, mit einer Kunststoff-Schicht, die Release-Eigenschaften gegenüber Klebstoffen aufweist, wobei die die Release-Eigenschaften erzeugenden Materialien innerhalb der Kunststoff-Schicht angeordnet sind, **dadurch gekennzeichnet, daß** beim gleichzeitigen Coextrudieren des gesamten Coextrudates eine erste Bahn(2,22) vorgesehen ist, auf deren einer Seite eine Kleberschicht(3,23) angeordnet wird, auf welche die Kunststoff-Schicht(4,24) mit den Release-Eigenschaften folgt, die ihrerseits mit einer zweiten Bahn(5,25) verbunden ist.

2. Verfahren nach Anspruch 1, **dadurch gekennzeichnet, daß** die Schichten gleichzeitig im Blasverfahren extrudiert werden.

3. Verfahren nach Anspruch 1, **dadurch gekennzeichnet, daß** die Schichten im Cast-Verfahren als Flachfolie hergestellt werden.

4. Verfahren nach Anspruch 1 oder 2, **dadurch gekennzeichnet, daß** das gesamte Coextrudat gereckt wird.

5. Mehrschichtiges Coextrudat hergestellt gemäß dem Verfahren nach einem der vorhergehenden Ansprüche, **dadurch gekennzeichnet, daß** wenigstens zwei Kunststoffolien(2,5;22,25) vorgesehen sind, zwischen denen eine Kleberschicht (3,23) und eine weitere Schicht(4,24) mit Release-Eigenschaften gegenüber dem Kleber angeordnet sind und daß das Coextrudat gereckt ist.

6. Mehrschichtiges Coextrudat nach Anspruch 5, **dadurch gekennzeichnet, daß** weitere Schichten(26) vorgesehen sind, die wahlweise beiderseits der Kunststoffolien angeordnet sind und daß das Coextrudat gereckt ist.

## Claims

1. Process for the production of a multilayer coextrudate with a plastic layer that has release properties with respect to adhesives, where the materials producing the release properties are located within the plastic layer, wherein a first web (2, 22) is provided in the simultaneous coextrusion of the entire coextrudate on one side of which a layer of adhesive (3, 23) is located, after which the plastic layer (4, 24) with the release properties follows, which is in turn bonded to a second web (5, 25).

2. Process according to claim 1, wherein the layers are extruded simultaneously by the blown film process.

3. Process according to claim 1, wherein the layers are produced by the cast film process.

4. Process according to claim 1 or 2, wherein the entire coextrudate is oriented.

5. Multilayer coextrudate produced in accordance with the process as described in one of the previous claims, wherein at least two plastic films (2, 5; 22, 25) are provided, between which a layer of adhesive (3, 23) and a further layer (4, 24) that has release properties with respect to the adhesive are located and wherein the coextrudate is oriented.

6. Multilayer coextrudate according to claim 5, wherein further layers (26) are provided that are located on either or both sides of the plastic films and wherein the coextrudate is oriented.

## Revendications

1. Procédé de production d'un co-extrudé multicouche comprenant une couche de plastique dotée de propriétés anti-adhésives par rapport aux colles, les matériaux à l'origine des propriétés anti-adhésives étant disposés à l'intérieur de la couche de plastique, **caractérisé en ce que**, lorsqu'on procède à la co-extrusion simultanée du co-extrudé dans son ensemble, une première bande (2, 22) est prévue, sur l'un des côtés de laquelle est déposée une couche de colle (3, 23) sur laquelle repose la couche de plastique (4, 24) aux propriétés anti-adhésives, qui à son tour est reliée à une deuxième bande (5, 25).

2. Procédé selon la revendication 1, **caractérisé en ce que** les couches sont extrudées simultanément selon un procédé de soufflage.

3. Procédé selon la revendication 1, **caractérisé en ce que** les couches sont extrudées selon un procédé de coulée sous forme de feuilles plates.

4. Procédé selon la revendication 1 ou 2, **caractérisé en ce que** le co-extrudé entier est étiré.

5. Co-extrudé multicouche produit selon le procédé selon l'une quelconque des revendications précédentes, **caractérisé en ce qu'**au moins deux feuilles de plastique (2, 5 ; 22, 25) sont prévues, entre lesquelles sont intercalées une couche de colle (3, 23) et une autre couche (4, 24) aux propriétés antiadhésives par rapport à la colle, et **en ce que** le co-extrudé est étiré.

6. Co-extrudé multicouche selon la revendication 5, **caractérisé en ce que** d'autres couches (26) sont prévues, qui sont disposées au choix de part et d'autre des feuilles de plastique, et **en ce que** le co-extrudé est étiré.
